# FASCICULE DE BREVET EUROPEEN

(11) **EP 1 119 761 B1**
(45) Date de publication et mention de la délivrance du brevet: **16.02.2005**
(21) Numéro de dépôt: 99970468.7
(22) Date de dépôt: 04.10.1999
(51) Int. Cl.: G01N 21/25

(54) **ANALYSEUR AUTOMATIQUE DE REACTION CHIMIQUE OU BIOCHIMIQUE**
AUTOMATISCHER ANALYSATOR FÜR CHEMISCHE ODER BIOCHEMISCHE REAKTIONEN
AUTOMATIC CHEMICAL OR BIOCHEMICAL REACTION ANALYSER

(30) Priorité: 08.10.1998 FR 9812757
(43) Date de publication de la demande: 01.08.2001
(73) Titulaire: Maxmat SA, 34940 Montpellier Cedex 9 (FR)
(72) Inventeur: RANDRIANARIVO, Jeanet, F-34380 Saint Martin de Londres (FR); VERMEULEN, Christiaan, F-74350 Cruseilles (FR); CHOJNACKI, André c/o Maxmat SA, F-34940 Montpellier cedex 9 (FR)
(74) Mandataire: Hecké, Gérard
(86) Numéro de dépôt international: PCT/FR1999/002360
(87) Numéro de publication internationale: WO 2000/022418

(56) Documents cités:
- EP-A- 0 950 892
- DE-A- 3 500 639
- DE-A- 4 117 008
- FR-A- 2 669 428

## Description

### Domaine technique de l'invention

L'invention est relative à un analyseur automatique de réaction chimique ou biochimique de laboratoire, destiné à déterminer le dosage de composants contenus dans des échantillons après mélange avec des réactifs dans des cupules d'une plaque d'analyse réactionnelle et comportant une tête de mesure comprenant :
- un premier détecteur d'analyse colorimétrique piloté par une source lumineuse associée à une fibre optique de transmission du faisceau lumineux vers fun des côtés de la plaque d'analyse réactionnelle, en coïncidence avec l'axe optique d'une cupule prédéterminée, laquelle est réalisée en une matière transparente,
- des moyens pour focaliser le faisceau lumineux lors de son passage à travers le mélange réactionnel dans ladite cupule,
- un dispositif photodétecteur disposé du côté opposé de la plaque d'analyse pour capter le faisceau lumineux émergent de la cupule, après avoir subi une atténuation,
- et un circuit électronique de traitement du signal délivré par le dispositif photodétecteur pour déterminer le spectre lumineux ou la densité optique du mélange réactionnel.

### Etat de la technique antérieure

Pour effectuer une mesure de la densité optique d'un milieu solide, liquide ou gazeux, il est nécessaire de disposer d'une source lumineuse de référence. Cette source lumineuse coopère avec un système optique de focalisation, de collimation ou de filtrage pour générer le rayon incident traversant le milieu. L'intensité lumineuse transmise est quantifiée par un photodétecteur. Un circuit de traitement calcule la valeur finale en faisant un rapport entre la mesure courante et une mesure sur un milieu neutre de référence, ou le rapport entre la mesure courante et une mesure réalisée via un second photodétecteur placé sur la source lumineuse.

Dans le cas de mesure polychromatique ou spectrophotométrique, la source lumineuse se présente sous la forme de lampe à halogène ou xénon générant une lumière blanche. Le problème survient lorsque plusieurs milieux d'emplacements distincts sont à analyser de façon séquentielle. Deux solutions sont usuellement adoptées : le système statique et le système dynamique.

Le système statique n'utilise aucun élément mobile, ce qui impose de multiplier les sources lumineuses et les photodétecteurs à chaque emplacement d'échantillon. Il a également été proposé de faire usage d'une source lumineuse unique associée à un faisceau multibrin de fibres optiques aboutissant à chaque emplacement de mesure. Outre le coût d'une telle installation, l'énergie lumineuse transmise à chaque échantillon est inversement proportionnelle à leur nombre, ce qui implique une augmentation du gain d'amplification. Le rapport signal-bruit de chaque mesure est également dégradé.

Le système mobile adopte une chaîne de mesure à voie unique, et offre deux options :

L'ensemble de la plaque d'analyse portant les cupules est mobile, de manière à amener chaque échantillon à la tête de mesure fixe. Durant les mesures sur des échantillons liquides, le rayon lumineux traverse le milieu perpendiculairement par rapport au fond plat transparent de la cupule et au ménisque de l'échantillon. Toute vibration mécanique de la plaque d'analyse provoque des déformations ou des ondes de surfaces sur le ménisque avec des risques d'erreurs de mesure.

Les documents FR-A-2 669 428 et DE-A-3500639 décrivent des dispositifs dans lesquels les échantillons sont placés sur un disque rotatif coopérant avec une tête de mesure fixe.

L'ensemble de la chaîne de mesure est mobile, et les échantillons de la plaque d'analyse sont fixes. Les vibrations des lampes à filament peuvent néanmoins engendrer des erreurs de mesure, et dégrader la durée de vie des lampes.

### Objet de l'invention

Un premier objet de l'invention consiste à réaliser une tête de mesure optique perfectionnée pour un analyseur d'échantillons par colorimétrie de grande précision.

Un deuxième objet de l'invention consiste à réaliser une tête de mesure optique multiple adaptée pour un analyseur automatique intégrant au moins deux systèmes de mesures pour des applications différentes, et permettant de conserver les mêmes équipements de stockage d'échantillons, de réactifs, de prélèvement, et la même plaque d'analyse.

L'invention concerne un analyseur selon les revendications annexées et, plus particulièrement, un analyseur caractérisé en ce que :
- la source lumineuse et la plaque d'analyse réactionnelle sont fixes,
- la tête de mesure comprend un support mobile, en forme de U, encadrant les faces opposées parallèles de la plaque d'analyse réactionnelle et sur lequel sont montés le premier détecteur, les moyens pour focaliser le faisceau lumineux, le dispositif photodétecteur et le circuit électronique ,
- l'analyseur comporte un mécanisme d'entraînement du support mobile pour amener le premier détecteur d'analyse colorimétrique en regard d'une cupule prédéterminée,
- la fibre optique possède une extrémité assujettie à la source lumineuse fixe et une extrémité opposée agencée dans un premier logement du support mobile.

La source lumineuse et la plaque d'analyse sont isolées de la tête de mesure, et l'avantage du système réside dans une préservation des vibrations mécaniques de la source lumineuse et de l'échantillon à analyser. La fibre optique intercalée entre la source lumineuse fixe et la partie inférieure du support mobile subit seule des mouvements de déformation en torsion et en flexion durant le positionnement de la tête de mesure. Pour s'affranchir d'une usure prématurée de la fibre optique suite aux frottements mécaniques occasionnés par la déformation, on utilisera avantageusement des fibres optiques dotées d'une pellicule extérieure de protection en matériau très résistant.

Selon un mode de réalisation préférentiel, le premier logement du support mobile renferme un collimateur optique pour délivrer un faisceau lumineux parallèle, et un détecteur photoélectrique de référence connecté au circuit électronique pour compenser les variations de flux lumineux lors de la déformation de la fibre optique. Un deuxième logement se trouve à l'opposé du premier logement, et renferme un système optique de focalisation en liaison optique avec le dispositif photodétecteur.

Selon une caractéristique de l'invention, le système optique de focalisation du dispositif photodétecteur est connecté à un réseau de diffraction pour une sélection statique de la longueur d'onde.

Selon un développement de l'invention, la tête de mesure est équipée d'un deuxième détecteur d'analyse photométrique disposé sur le support mobile pour effectuer une mesure d'opacimétrie. Le deuxième détecteur d'analyse photométrique comporte au moins une diode émettrice électroluminescente pour l'émission d'une lumière monochromatique, et coopérant avec une photodiode réceptrice sur le côté opposé du support mobile.

Il est ainsi possible d'intégrer deux systèmes de lectures différents dans la tête de mesure d'un analyseur, permettant d'une part d'effectuer des analyses en biochimie et en immunologie, et d'autre part des analyses pour des réactions d'hémostase, en utilisant les mêmes équipements de stockage d'échantillons, de réactifs, de prélèvement, et la même plaque d'analyse.

Dans l'analyseur selon l'invention, la face inférieure de la plaque d'analyse est confinée dans une enceinte maintenue à une température prédéterminée par une régulation thermostatique. L'enceinte est dotée avantageusement d'une paroi souple déformable autorisant le déplacement du support mobile sous la plaque d'analyse.

### Description sommaire des dessins

D'autres avantages et caractéristiques ressortiront plus clairement de la description qui va suivre d'un mode de réalisation de l'invention, donnée à titre d'exemple non limitatif et représenté aux dessins annexés dans lesquels:
- la figure 1 est une vue schématique de l'analyseur équipé d'une tête de mesure mixte par colorimétrie et photométrie selon l'invention ;
- la figure 2 montre une vue en plan de la figure 1 ;
- la figure 3 représente une vue schématique en perspective de l'analyseur ;
- la figure 4 est une vue similaire de la figure 1 d'une variante utilisant une tête de mesure par colorimétrie.

### Description d'un mode de réalisation préférentiel

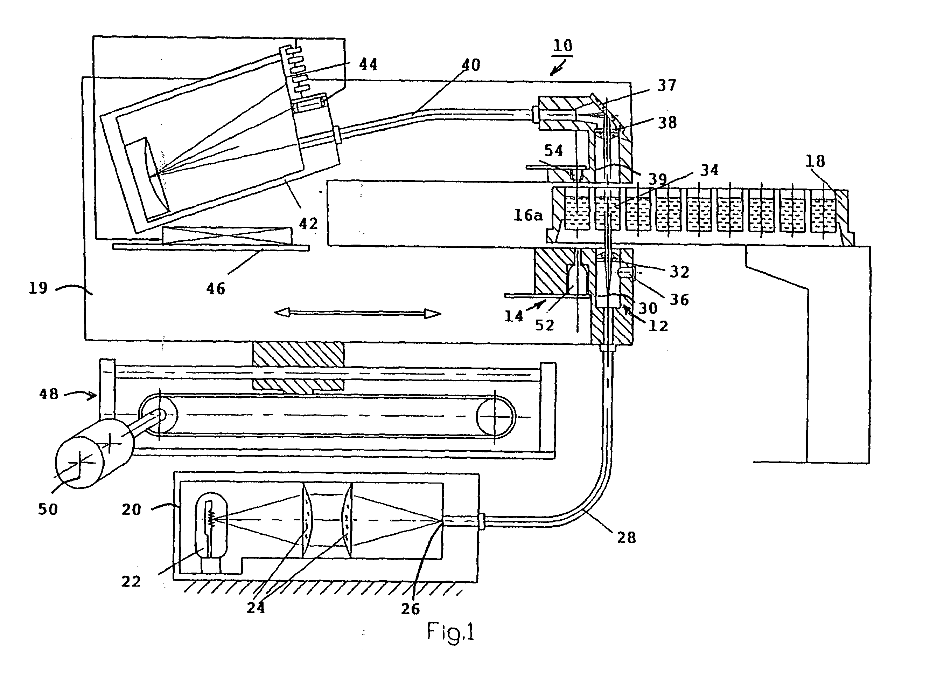

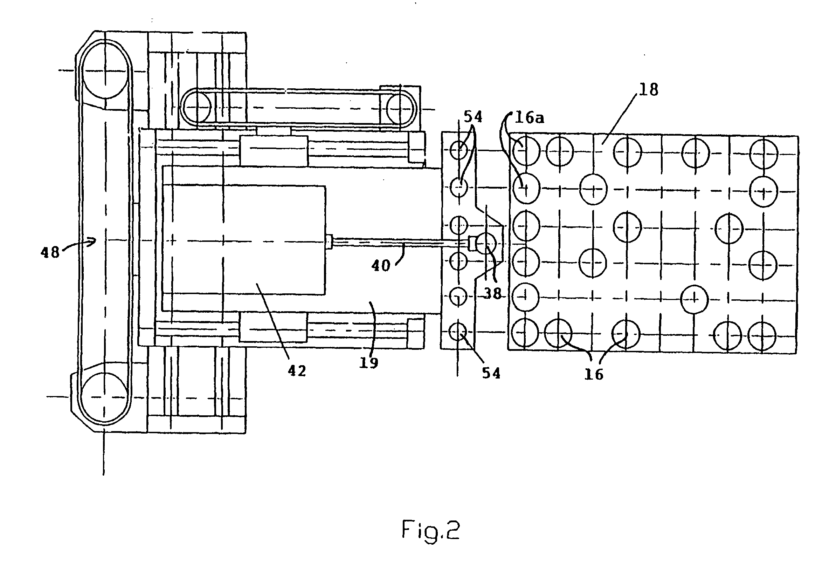

Sur les figures 1 à 3, une tête de mesure 10 d'un analyseur de réaction chimique ou biochimique de laboratoire, comporte un premier détecteur d'analyse colorimétrique 12, et un deuxième détecteur d'analyse photométrique 14 pour déterminer le dosage de composants contenus dans des échantillons, par exemple le sang, le liquide céphalo-rachidien, l'urine. Le mécanisme de commande de l'analyseur automatique prélève une quantité prédéfinie d'échantillon, et une quantité prédéfinie de réactif, puis en effectue le mélange dans des cupules 16 d'une plaque d'analyse 18 réactionnelle conformée en microplaque. La mesure de l'évolution de la densité optique par la tête de mesure 10 définit directement la concentration du composant à doser selon une méthodologie préétablie.

Le premier détecteur d'analyse colorimétrique 12 utilise un colorimètre multichromatique pour effectuer des analyses en biochimie et en immunologie. Le deuxième détecteur d'analyse photométrique 14 fait usage de photomètres monochromatiques pour des réactions d'hémostase.

Les deux détecteurs 12, 14 sont montés sur un support mobile 19 en forme de U qui encadre verticalement les faces opposées parallèles de la plaque d'analyse 18 réactionnelle, laquelle est fixe.

### Description du premier détecteur d'analyse colorimétrique

Le premier détecteur d'analyse colorimétrique 12 est piloté par une source lumineuse 20 agencée de manière fixe sur le bâti de l'analyseur, et comprenant une lampe 22 associée à un dispositif optique de focalisation formé par une paire de lentilles convergentes 24. L'énergie lumineuse émise par les lentilles 24 est concentrée sur une extrémité 26 d'une fibre optique 28 de transmission du faisceau lumineux vers le premier détecteur d'analyse colorimétrique 12. La lampe 22 utilisée peut être par exemple du type halogène, ou Xénon, ayant un large spectre de longueur d'onde compris entre 340nm à 700nm, c'est à dire allant de l'ultraviolet jusqu'à l'infrarouge, ou encore du type laser.

L'autre extrémité de la fibre optique 28 est fixée dans un premier logement 30 à la partie inférieure du support mobile 19, de manière à diriger le rayon lumineux en coïncidence avec l'axe optique d'une cupule 16 prédéterminée de la plaque d'analyse 18 réactionnelle. Le logement 30 renferme un collimateur optique 32 destiné à délivrer un rayon lumineux parallèle, lequel traverse le fond transparent de la cupule 16 et le mélange 34 réactionnel, et émerge via le ménisque du mélange 34. Un détecteur de référence 36 formé à titre d'exemple par une cellule photoélectrique, se trouve également dans le logement 30, et intervient en cas de fluctuation de la source lumineuse 20, ou d'atténuation du faisceau suite à la déformation de la fibre optique 28.

La partie supérieure du support mobile 19 est séparée de la partie inférieure par la plaque d'analyse 18 réactionnelle, et est équipée d'un dispositif photodétecteur 37. Ce dernier comporte un système optique de focalisation 38 situé dans un deuxième logement 39 du support mobile 19 pour collecter la lumière incidente sur une deuxième fibre optique 40, laquelle est connectée à un réseau de diffraction 42 fixé sur la partie postérieure du support mobile 19. Le réseau de diffraction 42 permet une sélection statique de la longueur d'onde, et est associé à une pluralité de photodiodes 44 connectées à un circuit électronique de traitement 46 destiné à détecter le spectre lumineux incident du mélange réactionnel. La mesure de la densité optique résulte d'une équation liant le signal issu du détecteur de référence 36 et le signal de sortie de chaque photodiode 44.

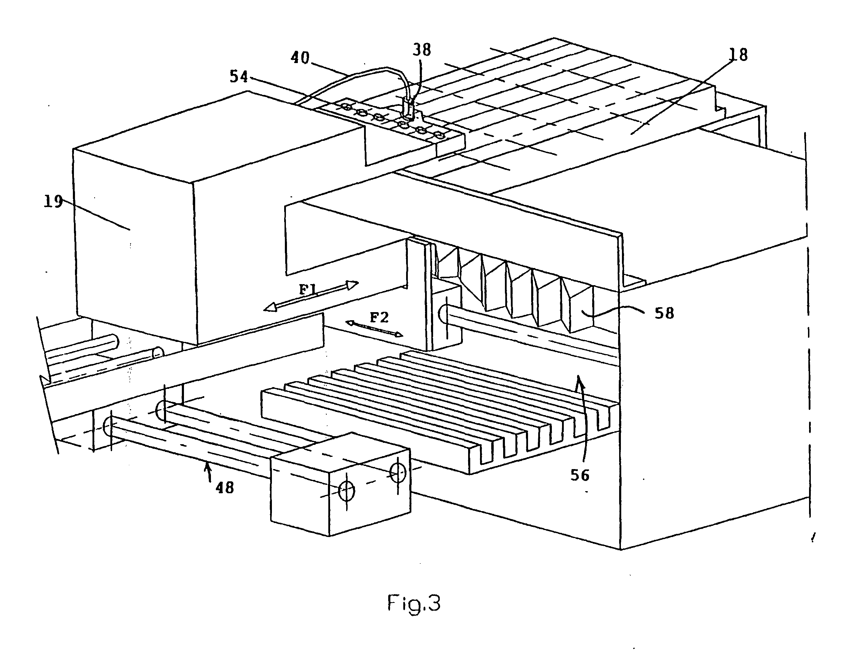

Le déplacement du support mobile 19 s'opère sur deux axes (flèches F1 et F2, figure 3) dans le plan horizontal, et est assuré par un mécanisme 48 d'entraînement à moteur 50 pas-à-pas. La tête de mesure 10 peut ainsi être positionnée coaxialement sur chaque cupule 16 de la microplaque. Le collimateur optique 32 éclaire le fond de la cupule 16, et le faisceau lumineux traverse le milieu du mélange 34 en subissant une atténuation. Le système optique de focalisation 38 à la partie supérieure de la tête de mesure 10 récupère le rayon émergent de la cupule 16, et le conduit vers le réseau de diffraction 42 et les photodiodes 44 pour quantifier cette atténuation.

La fibre optique 28 intercalée entre la source lumineuse 20 fixe et la partie inférieure du support mobile 19 subit seule des mouvements de déformation en torsion et en flexion durant le positionnement de la tête de mesure 10, et évite toute transmission des vibrations mécaniques vers la source lumineuse 20 et l'échantillon à mesurer sur la plaque d'analyse 18 fixe.

Pour s'affranchir d'une usure prématurée de la fibre optique 28 suite aux frottements mécaniques occasionnés par la déformation, on utilisera avantageusement des fibres optiques dotées d'une pellicule extérieure de protection en matériau très résistant.

Le passage du faisceau lumineux dans la fibre optique 28 engendre une atténuation qui varie en fonction de la courbure prise pour un emplacement en regard d'une cupule prédéterminée. Cette courbure peut néanmoins varier pour un même emplacement entre deux mesures séparées suite à un aller-retour du support mobile 19. Pour se prémunir de toute erreur de mesure consécutive à ces variations, la cellule photoélectrique du détecteur de référence 36 se trouvant dans le logement 30, quantifie la variation cumulée de l'atténuation de la fibre optique 28, ainsi que la dérive éventuelle de l'intensité de la source lumineuse 20. Le circuit électronique 46 prend en compte la mesure foumie par le détecteur de référence 36, et compense les mesures délivrées par les photodiodes 44.

Une réaction biochimique ou immunologique subit une évolution de la densité optique relativement lente, et une mesure espacée toutes les trente secondes est suffisante pour obtenir un résultat fiable. Le support mobile 19 peut alors balayer les autres cupules 16 avant de revenir effectuer une mesure sur la cupule courante.

### Description du deuxième détecteur d'analyse photométrique

Le deuxième détecteur d'analyse photométrique 14 est utilisé pour une réaction d'hémostase, dans laquelle le mélange réactionnel dans la cupule 14a est constitué d'échantillon de plasma humain et d'un réactif spécifique déclenchant un effet de coagulation.

La coagulation s'accompagne d'une variation d'opacité du mélange dans la cupule 16a, et le rôle du détecteur d'analyse photométrique 14 consiste à déterminer selon un algorithme spécifique, le temps nécessaire pour obtenir la coagulation du mélange réactionnel.

Lors d'une analyse hémostatique, la variation de l'opacité du mélange varie très rapidement au moment de la coagulation, et la précision du chronométrage doit atteindre le dixième de seconde. La réaction de coagulation est surveillée de façon continue jusqu'à la formation du caillot.

Le support mobile 19 de la tête de mesure 10 est pourvue dans sa partie inférieure d'une rangée de six diodes électroluminescentes 52 pour l'émission d'une lumière monochromatique, chaque diode émettrice étant associée à un collimateur. Le rayon lumineux émis par chaque diode 52 traverse la cupule de réaction 16a correspondante selon un trajet vertical. Une série de six photodiodes 54 est agencée en regard des diodes 52 sur la partie supérieure de la tête de lecture 10, et intercepte le rayon émergent de chaque cupule 16a pour une mesure d'opacité. L'axe optique de chaque diode émettrice 52 correspond à celui d'une photodiode 54 et à l'axe principal de la cupule 16a. L'énergie fournie par les diodes électroluminescentes 52 est suffisante pour effectuer les analyses hémostatiques chronométriques.

Les six capteurs du deuxième détecteur d'analyse photométrique 14 permettent un suivi en parallèle de plusieurs réactions d'hémostase dans les six cupules 16a.

La présente invention permet d'intégrer dans la tête de mesure 10 deux systèmes de mesures différents agencés sur le support mobile 19. Cette disposition permet d'initier indifféremment des analyses dans les domaines de biochimie, immunologie, hémostase avec les mêmes supports de stockage d'échantillons, de réactifs, les mêmes équipements de prélèvement, et les mêmes cupules réactionnelles.

Une réaction dans les domaines biochimique, immunologique et hémostatique doit se réaliser dans les conditions les plus proches du milieu naturel où elle se déroule normalement. Les réactifs utilisés sont de plus sensibles à toute variation de température, surtout pour le type enzymatique. La plaque d'analyse 18 est maintenue à température constante durant toute l'évolution de l'analyse. Le plus souvent, cette température est fixée à 37°C pour coïncider à celle du corps humain.

En référence à la figure 3, la mise à température de la plaque d'analyse 18 réactionnelle s'effectue par une convection forcée d'air chaud voisin de 37°C. Pour limiter les déperditions de calories lors du déplacement du support mobile 19, une enceinte thermique 56 est aménagée sous la plaque d'analyse 18. L'enceinte 56 est constituée par un matériau souple avec une paroi en accordéon 58 solidaire du support mobile 19, et autorisant la mise en température de la plaque d'analyse 18 avec un minimum de perdition de chaleur, tout en permettant une totale liberté de déplacement du support mobile 19 sous la plaque d'analyse 18. Le volume de l'enceinte 56 est délimité par quatre parois latérales et une paroi inférieure, la paroi supérieure étant constituée par la face inférieure de la plaque d'analyse 18. Un ventilateur ( non représenté) permet de chauffer cette dernière par convection forcée, et un circuit électronique piloté par des sondes de température, assure une régulation thermostatique.

La paroi arrière déformable solidaire du support mobile 19 est constituée d'une feuille flexible agencée en forme d'accordéon 58, et fixée en plus contre les parois latérales de l'enceinte 56. Le déplacement du support mobile 19 déforme la paroi élastique en accordéon 58, tout en assurant l'étanchéité de l'enceinte 56 thermostatique.

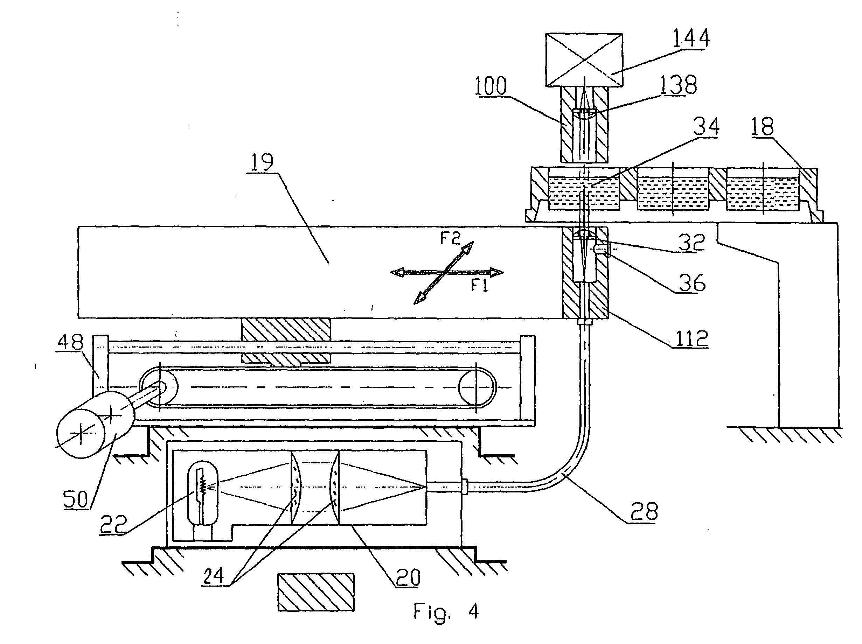

La figure 4 montre une variante de réalisation d'une tête de mesure 100 faisant usage d'un seul détecteur d'analyse colorimétrique 112. Toutes les pièces identiques à celles du dispositif de la figure 1 ne seront plus décrites, et porteront sur la figure 4 les mêmes numéros de références. Les photodiodes 144 réceptrices sont agencées directement en amont du système optique de focalisation 138 par rapport à la direction de propagation du faisceau lumineux. La fibre optique 40 est alors supprimée.

La présente invention s'étend bien entendu à d'autres analyses de réactions chimiques, et la méthode de mesure par fibre optique 28 mobile du premier détecteur d'analyse colorimétrique 12 peut s'appliquer à toute caractérisation d'un milieu solide, liquide ou gazeux en transmission, réflexion, réfraction, diffraction, diffusion utilisant une lumière naturelle, polarisée, cohérente dans un mode monochromatique ou polychromatique.

## Revendications

1. Analyseur automatique de réaction chimique ou biochimique de laboratoire, destiné à déterminer le dosage de composants contenus dans des échantillons après mélange avec des réactifs dans des cupules (16, 16a) d'une plaque d'analyse (18) réactionnelle et comportant une tête de mesure comprenant :
- un premier détecteur d'analyse colorimétrique (12, 122) piloté par une source lumineuse (20) associée à une fibre optique (28) de transmission du faisceau lumineux vers l'un des côtés de la plaque d'analyse (18) réactionnelle, en coïncidence avec l'axe optique d'une cupule prédéterminée, laquelle est réalisée en une matière transparente,
- des moyens pour focaliser le faisceau lumineux lors de son passage à travers le mélange (34) réactionnel dans ladite cupule 16),
- un dispositif photodétecteur (37) disposé du côté opposé de la plaque d'analyse (18) pour capter le faisceau lumineux émergent de la cupule (16), après avoir subi une atténuation,
- et un circuit électronique (46) de traitement du signal délivré par le dispositif photodétecteur (37) pour déterminer le spectre lumineux ou la densité optique du mélange (34) réactionnel,
analyseur **caractérisé en ce que** :
- la source lumineuse (20) et la plaque d'analyse (18) réactionnelle sont fixes,
- la tête de mesure (10, 100) comprend un support mobile (19), en forme de U, encadrant les faces opposées parallèles de la plaque d'analyse (18) réactionnelle et sur lequel sont montés le premier détecteur 12, 122), les moyens pour focaliser le faisceau lumineux, le dispositif photodétecteur (37) et le circuit électronique (46),
- l'analyseur comporte un mécanisme d'entraînement (48) du support mobile pour amener le premier détecteur d'analyse colorimétrique (12, 112) en regard d'une cupule prédéterminée,
- la fibre optique (28) possède une extrémité assujettie à la source lumineuse (20) fixe et une extrémité opposée agencée dans un premier logement (30) du support mobile (19).

2. Analyseur selon la revendication 1, **caractérisé en ce que** le premier logement (30) du support mobile renferme un collimateur optique (32) pour délivrer un rayon lumineux parallèle, et un détecteur photoélectrique de référence (36) connecté au circuit électronique (46) pour compenser les, variations de flux lumineux lors de la déformation de la fibre optique (28).

3. Analyseur selon la revendication 2, **caractérisé en ce que** le support mobile (19) comporte un deuxième logement (39) à l'opposé du premier logement (30) et renfermant un système optique de focalisation (38) en liaison optique avec le dispositif photodétecteur (37).

4. Analyseur selon la revendication 1, **caractérisé en ce que** le système optique de focalisation (38) est connecté à un réseau de diffraction (42) pour une sélection statique de la longueur d'onde.

5. Analyseur selon la revendication 4, **caractérisé en ce que** le système optique de focalisation (38) est connecté au réseau de diffraction (42) par l'intermédiaire d'une deuxième fibre optique (40).

6. Analyseur selon l'une quelconque des revendications 1 à 5, **caractérisé en ce que** la tête de mesure (10) est équipée d'un deuxième détecteur d'analyse photométrique (14) disposé sur le support mobile (19) pour effectuer une mesure d'opacimétrie.

7. Analyseur selon la revendication 6, **caractérisé en ce que** le deuxième détecteur d'analyse photométrique (14) comporte au moins une diode émettrice (52) électroluminescente pour l'émission d'une lumière monochromatique, et coopérant avec une photodiode réceptrice (54) sur le côté opposé du support mobile (19).

8. Analyseur selon l'une quelconque des revendications 1 à 7, **caractérisé en ce qu'**il comporte une enceinte thermique destinée à recevoir la plaque d'analyse, la face inférieure de la plaque d'analyse (18) est maintenue à une température prédéterminée par une régulation thermostatique.

9. Analyseur selon la revendication 8, **caractérisé en ce que** l'enceinte (56) est dotée d'une paroi (58) souple déformable autorisant le déplacement du support mobile (19) sous la plaque d'analyse (18).

## Claims

1. Automatic laboratory chemical or biochemical reaction analyser designed to determine the dosing of components contained in samples after mixing with reagents in cups (16, 16a) of a reaction analysis plate (18) and comprising a measuring head comprising:
- a first colorimetric analysis detector (12, 122) controlled by a light source (20) associated to an optic fibre (28) for transmission of the light beam to one of the sides of the reaction analysis plate (18), coinciding with the optic axis of a predetermined cup, which cup is made of transparent material,
- means for focussing the light beam when the latter passes through the reaction mixture (34) in said cup (16),
- a photodetector device (37) arranged on the opposite side of the analysis plate (18) to collect the light beam emerging from the cup (16) after this beam has been subjected to an attenuation,
- and an electronic processing circuit (46) for processing the signal delivered by the photodetector device (37) to determine the light spectrum or the optical density of the reaction mixture (34),
analyser **characterized in that**:
- the light source (20) and the reaction analysis plate (18) are fixed,
- the measuring head (10, 100) comprises a U-shaped mobile support (19), framing the parallel opposite sides of the reaction analysis plate (18) and whereon the first detector (12, 122), the means for focussing the light beam, the photodetector device (37) and the electronic processing circuit (46) are set,
- the analyser comprises a drive mechanism (48) of the mobile support to bring the first colorimetric analysis detector (12, 112) to face a predetermined cup,
- the optic fibre (28) has one end secured to the fixed light source (20) and an opposite end arranged in a first housing (30) of the mobile support (19).

2. Analyser according to claim 1, **characterized in that** the first housing (30) of the mobile support contains an optical collimator (32) to deliver a parallel light beam and a reference photoelectric detector (36) connected to the electronic circuit (46) to compensate the light flux variations when deformation of the optic fibre occurs (28).

3. Analyser according to claim 2, **characterized in that** the mobile support (19) comprises a second housing (39) located opposite the first housing (30) and containing an optical focussing system (38) optically linked with the photodetector device (37).

4. Analyser according to claim 1, **characterized in that** the optical focussing system (38) is connected to a diffraction network (42) for static wavelength selection.

5. Analyser according to claim 4, **characterized in that** the optical focussing system (38) is connected to the diffraction network (42) by means of a second optic fibre (40).

6. Analyser according to any one of the claims 1 to 5, **characterized in that** the measuring head (10) is equipped with a second photometric analysis detector (14) arranged on the mobile support (19) to perform an opacimetry measurement.

7. Analyser according to claim 6, **characterized in that** the second photometric analysis detector (14) comprises at least one light-emitting diode (52) for emission of a monochromatic light, operating in conjunction with a receiver photodiode (54) on the opposite side of the mobile support (19).

8. Analyser according to any one of the claims 1 to 7, **characterized in that** it comprises a thermal enclosure designed to receive the analysis plate, the bottom face of the analysis plate (18) being kept at a preset temperature by a thermostatic control.

9. Analyser according to claim 8, **characterized in that** the enclosure (56) is provided with a deformable flexible wall (58) allowing the mobile support (19) to move under the analysis plate (18).

## Patentansprüche

1. Automatischer Analysator für chemische oder biochemische Reaktionen im Labor, der dazu bestimmt ist, die Dosierung von in Proben enthaltenen Bestandteilen nach Vermischung mit Reagenzien in Vertiefungen (16, 16a) einer Reaktionsanalyseplatte (18) zu bestimmen, und der einen Messkopf mit folgenden Teilen umfasst:
- einen ersten Messfühler für die kolorimetrische Analyse (12, 122), der von einer Lichtquelle (20) gesteuert wird, die mit einer optischen Faser (28) zur Übertragung des Lichtbündels in Richtung auf eine der Seiten der Reaktionsanalyseplatte (18) gekoppelt ist, und zwar deckungsgleich mit der optischen Achse einer vorbestimmten Vertiefung, die in einem transparenten Material hergestellt ist,
- Mittel zum Fokussieren des Lichtbündels, wenn dieses das Reaktionsgemisch (34) in der Vertiefung (16) durchdringt,
- eine Fotodetektorvorrichtung (37), die auf der entgegengesetzten Seite zur Analyseplatte (18) angeordnet ist, um das aus der Vertiefung (16) austretende Lichtbündel nach dessen Abschwächung zu erfassen,
- und eine Elektronikschaltung (46) zur Verarbeitung des von der Fotodetektorvorrichtung (37) erzeugten Signals zur Bestimmung des Lichtspektrums oder der optischen Dichte des Reaktionsgemischs (34),
Analysator **dadurch gekennzeichnet, dass**:
- die Lichtquelle (20) und die Reaktionsanalyseplatte (18) stationär sind,
- der Messkopf (10, 100) einen beweglichen Träger (19) in Form eines U umfasst, der die parallelen, entgegengesetzten Seiten der Reaktionsanalyseplatte (18) einfasst und an den der erste Messfühler (12, 122), die Mittel zur Fokussierung des Lichtbündels, die Fotodetektorvorrichtung (37) und die Elektronikschaltung (46) montiert sind,
- der Analysator einen Antriebsmechanismus (48) für den beweglichen Träger umfasst, um den ersten Messfühler für die kolorimetrische Analyse (12, 112) gegenüber einer vorbestimmten Vertiefung anzuordnen,
- die optische Faser (28) ein Ende aufweist, das an der stationären Lichtquelle (20) befestigt ist, und ein entgegengesetztes Ende, das in einer ersten Aufnahme (30) des beweglichen Trägers (19) angeordnet ist.

2. Analysator nach Anspruch 1, **dadurch gekennzeichnet, dass** die erste Aufnahme (30) des beweglichen Trägers einen optischen Kollimator (32) zum Erzeugen eines parallen Lichtstrahls umfasst, sowie einen Referenz-Fotodetektor (36), der mit der Elektronikschaltung (46) verbunden ist, um die Schwankungen des Lichtstroms bei der Verformung der optischen Faser (28) auszugleichen.

3. Analysator nach Anspruch 2, **dadurch gekennzeichnet, dass** der bewegliche Träger (19) entgegengesetzt zur ersten Aufnahme (30) eine zweite Aufnahme (39) umfasst und ein optisches Fokussierungssystem (38) einschließt, das optisch mit der Fotodetektorvorrichtung (37) verbunden ist.

4. Analysator nach Anspruch 1, **dadurch gekennzeichnet, dass** das optische Fokussierungssystem (38) zur statischen Auswahl der Wellenlänge an ein Beugungsgitter (42) gelegt ist.

5. Analysator nach Anspruch 4, **dadurch gekennzeichnet, dass** das optische Fokussierungssystem (38) über eine zweite optische Faser (40) mit dem Beugungsgitter (42) verbunden ist.

6. Analysator nach einem der Ansprüche 1 bis 5, **dadurch gekennzeichnet, dass** der Messkopf (10) mit einem zweiten Fotometrikanalysedetektor (14) versehen ist, der an den beweglichen Träger (19) montiert ist, um eine opazimetrische Messung vorzunehmen.

7. Analysator nach Anspruch 6, **dadurch gekennzeichnet, dass** der zweite Fotometrikanalysedetektor (14) mindestens eine Elektrolumineszenz-Emitterdiode (52) zur Erzeugung eines monochromatischen Lichts umfasst die auf der zum beweglichen Träger (19) entgegegengesetzten Seite mit einer Empfangs-Fotodiode (54) zusammenwirkt.

8. Analysator nach einem der Ansprüche 1 bis 7, **dadurch gekennzeichnet, dass** er einen Thermobehälter umfasst, der die Analyseplatte aufnehmen soll, wobei die Unterseite der Analyseplatte (18) durch thermostatische Regelung auf einer vorbestimmten Temperatur gehalten wird.

9. Analysator nach Anspruch 8, **dadurch gekennzeichnet, dass** der Behälter (56) eine verformbare, biegsame Wand (58) aufweist, die das Verfahren des beweglichen Trägers (19) unter der Analyseplatte (18) ermöglicht.
